(19) Europäisches Patentamt
European Patent Office
Office européen des brevets

(11) Veröffentlichungsnummer : **0 062 824**
**B1**

(12) # EUROPÄISCHE PATENTSCHRIFT

(45) Veröffentlichungstag der Patentschrift : **05.06.85**

(51) Int. Cl.⁴ : **C 09 B 44/02**, D 06 P 1/08, D 21 H 3/80

(21) Anmeldenummer : **82102616.8**

(22) Anmeldetag : **29.03.82**

(54) **Sulfonsäuregruppenhaltige kationische Azofarbstoffe, ihre Herstellung und ihre Verwendung.**

(30) Priorität : **08.04.81 DE 3114089**

(43) Veröffentlichungstag der Anmeldung : **20.10.82 Patentblatt 82/42**

(45) Bekanntmachung des Hinweises auf die Patenterteilung : **05.06.85 Patentblatt 85/23**

(84) Benannte Vertragsstaaten : **CH DE FR GB LI**

(56) Entgegenhaltungen :
**FR-A- 1 533 643**
**FR-A- 2 424 305**
**GB-A- 951 667**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Stöhr, Frank-Michael, Dr.**
**Weidenweg 25**
**D-5093 Burscheid (DE)**
Erfinder : **Wild, Peter, Dr.**
**Hainstrasse 7**
**D-6305 Alten Buseck (DE)**
Erfinder : **Nickel, Horst, Dr.**
**Fontanestrasse 23**
**D-5090 Leverkusen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 062 824 B1

**Beschreibung**

Gegenstand der vorliegenden Erfindung sind wasserlösliche Azofarbstoffe der allgemeinen Formel

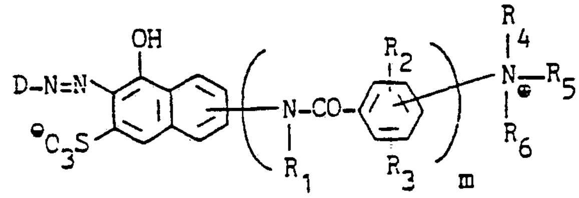

(I)

worin

D den Rest einer Diazokomponente,

$R_1$ Wasserstoff oder Alkyl,

$R_2$ und $R_3$ unabhängig voneinander Wasserstoff, Alkyl, Alkoxy, Cyan oder Halogen,

$R_4$, $R_5$ und $R_6$ unabhängig voneinander Alkyl, Alkenyl oder Aralkyl und

m 0 oder 1 bedeuten,

und worin die cyclischen und acyclischen Reste weitere Substituenten tragen können, ihre Herstellung und ihre Verwendung zum Färben von synthetischen und natürlichen Materialien, insbesondere Papier.

Da die Sulfonsäuregruppe mit der kationischen Gruppe ein inneres Salz bilden kann, ist aus Gründen der erforderlichen Wasserlöslichkeit die Bedingung vorgegeben, daß die Farbstoffe mindestens eine weitere basische oder kationische Gruppe enthalten müssen. Die weiteren basischen und kationischen Gruppen sind zur äußeren Salzbildung befähigt und bewirken somit die Wasserlöslichkeit.

In Formel (I) steht D insbesondere für den Rest

$$D_1—(N = N—D_2)_n— \qquad (II)$$

worin

$D_1$ einen Rest der Benzol-, Naphthalin- oder heterocyclischen Reihe,

$D_2$ Phenylen oder Naphthylen und

n 0 oder 1 bedeuten,

und worin $D_1$ und/oder $D_2$ durch nichtionogene Reste oder eine Sulfonsäuregruppe substituiert sein können und durch mindestens eine Gruppe der Formel

$$X—W—(CH_2)_n— \qquad (III)$$

substituiert sind, worin

X eine Amino- oder Ammoniumgruppe und

W eine direkte Bindung oder ein Brückenglied bedeuten.

X steht vorzugsweise für $X_1$, das eine Gruppe der Formel

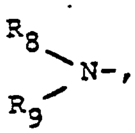 , 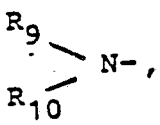 , 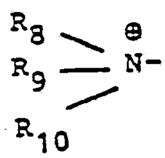 $A^\ominus$, 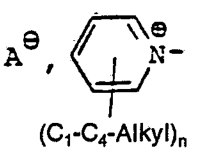 $A^\ominus$ oder 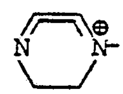 $A^\ominus$

darstellt, worin

$R_8$, $R_9$, $R_{10}$ Wasserstoff, Alkyl, Alkenyl oder Aralkyl und

$R_8$ außerdem Amino, Alkylamino, Dialkylamino, Aryl oder Cycloalkyl bedeuten, oder

$R_9$ und $R_{10}$ zusammen mit dem an sie gebundenen Stickstoffatom einen 5- oder 6-gliedrigen Ring bilden,

n 0 oder 1 und

$A^\ominus$ ein Anion bedeuten.

W steht vorzugsweise für $W_1$, das für eine direkte Bindung steht oder eine Gruppe der Formel

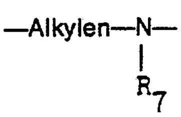 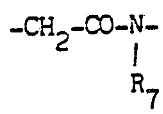 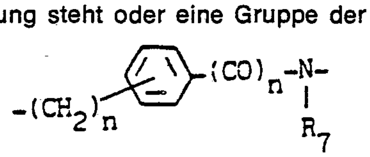

oder

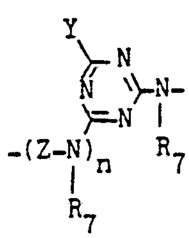

darstellt, worin die freie Valenz von $—NR_7$ an $—(CH_2)_n—$ von (III) gebunden ist, und
$R_7$ Wasserstoff oder Alkyl,
Y Halogen, Hydroxy, Alkyl, Aryl, Alkoxy oder eine Gruppe

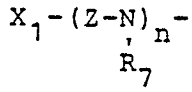 und

Z Alkylen, Aralkylen oder Arylen bedeuten.

Als Anion $A^\ominus$ kommen übliche farblose organische und anorganische Anionen beispielsweise Chlorid, Bromid, Jodid, Hydroxyl, Hydrogensulfat, Sulfat, Nitrat, Dihydrogenphosphat, Hydrogenphosphat, Phosphat, Carbonat, Methosulfat, Ethosulfat, Formiat, Acetat, Propionat, Benzolsulfonat und Toluolsulfonat in Betracht.

Das Anion ist im allgemeinen durch das Herstellungsverfahren gegeben. Vorzugsweise liegen die Chloride, Hydrogensulfate, Sulfate, Methosulfate, Phosphate, Formiate oder Acetate vor. Die Anionen können in bekannter Weise gegen andere Anionen ausgetauscht werden.

Nichtionogene Substituenten im Sinne der vorliegenden Erfindung sind die nicht dissoziierenden Substituenten wie zum Beispiel Cyan, Hydroxy, Halogen, wie Fluor, Chlor oder Brom, Alkyl, Alkoxy, wobei Alkyl und Alkoxy vorzugsweise 1-4 C-Atome enthalten.

Substituenten der Alkylreste sind beispielsweise Halogen, Hydroxy, $C_1$-$C_4$-Alkoxy, Cyan, Amino, Mono- und Dialkylamino. Halogen steht vorzugsweise für Fluor, Chlor oder Brom.

Allgemein werden unter Alkylresten insbesondere solche mit 1-8 C-Atomen verstanden und unter Alkenylresten solche mit 2-4 C-Atomen.

Cycloalkyl steht z. B. für gegebenenfalls durch $C_1$-$C_4$-Alkyl substituiertes Cyclopentyl oder Cyclohexyl.

Vorzugsweise wird unter Aryl Phenyl und Naphthyl, unter Aralkyl Benzyl und Phenylethyl, unter Alkylen Verbindungen mit 2-4 C-Atomen, unter Aralkylen Benzylen und unter Arylen Phenylen und Naphthylen verstanden.

Die Ringe können ihrerseits beispielsweise durch 1-3 nichtionogene Reste wie Halogen, $C_1$-$C_4$-Alkyl, $C_1$-$C_4$-Alkoxy oder Cyan substituiert sein.

Die Reste $R_9$ und $R_{10}$ bilden zusammen mit dem Stickstoffatom beispielsweise gegebenenfalls durch $C_1$-$C_4$-Alkyl substituiertes Pyrrolidin, Piperidin, Morpholin oder Piperazin, dessen externes N-Atom alkyliert oder quaterniert sein kann.

Von den Farbstoffen der Formel (I) sind die der Formel

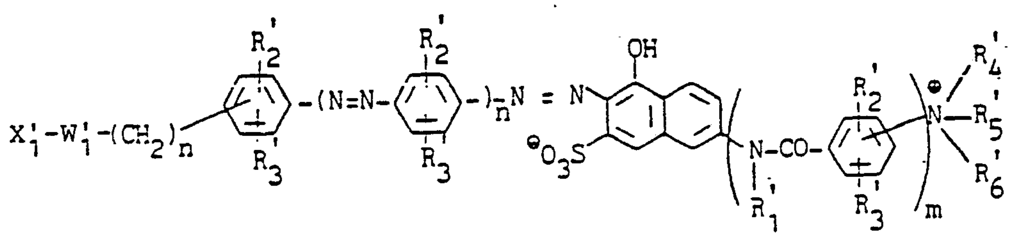 (IV)

hervorzuheben, worin
$R_1'$ Wasserstoff oder Methyl,
$R_2'$ und $R_3'$ unabhängig voneinander Wasserstoff, $C_1$-$C_4$-Alkyl, $C_1$-$C_4$-Alkoxy, Cyan oder Halogen,
$R_4'$, $R_5'$ und $R_6'$ unabhängig voneinander gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl oder Phenylethyl,
$X_1'$ eine Gruppe der Formel

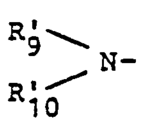 , 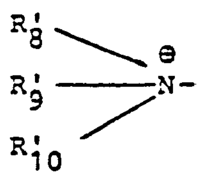 $A^\ominus$ , 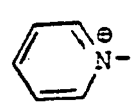 $A^\ominus$ oder 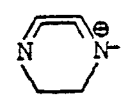 $A^\ominus$

$R_8'$, $R_9'$ und $R_{10}'$ unabhängig voneinander Wasserstoff, gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl oder Phenylethyl, oder
$R_9'$ und $R_{10}'$ zusammen mit dem an sie gebundenen N-Atom ein gegebenenfalls durch $C_1$-$C_4$-Alkyl substituiertes Pyrrolidin, Piperidin, Morpholin oder Piperazin, dessen externes Stickstoffatom durch gegebenenfalls durch OH oder $NH_2$ substituiertes $C_1$-$C_4$-Alkyl alkyliert oder quaterniert sein kann,

$W_1'$ eine direkte Bindung oder eine Gruppe der Formel

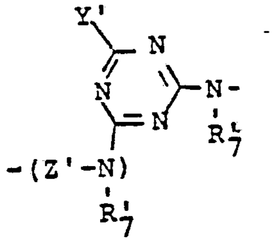

worin

$R_7'$ Wasserstoff oder $C_1$-$C_4$-Alkyl,

Y' Halogen, Hydroxy, $C_1$-$C_4$-Alkyl, Phenyl, $C_1$-$C_4$-Alkoxy oder eine Gruppe der Formel

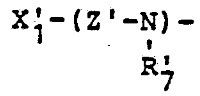

Z' $C_2$-$C_6$-Alkylen oder Phenylen,

m und n 0 oder 1 und

$A^{\ominus}$ ein Anion bedeuten.

Ebenso sind Farbstoffe der Formel

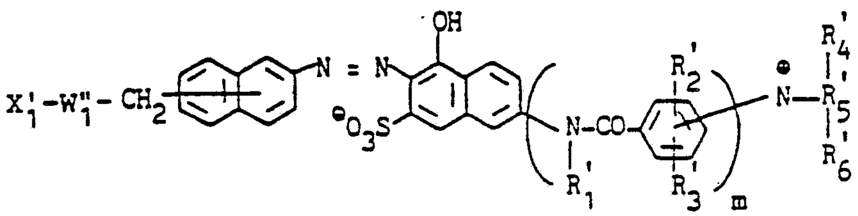

(V)

hervorzuheben, worin $W_1''$ eine direkte Bindung oder eine Gruppe der Formel

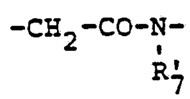

oder

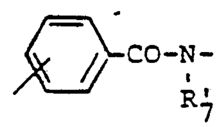

bedeutet, und

m, $X_1'$ und $R_1'$-$R_7'$ die in Formel (IV) angegebene Bedeutung haben.

$R_8'$, $R_9'$ und $R_{10}'$ bilden insbesondere nur dann die vorstehend genannten Ringe, wenn $W_1''$ ein Brückenglied darstellt.

Bevorzugt steht der Rest

$$X_1'—W_1''—CH_2—$$

in der 5-Stellung des Naphthalinringes.

Die Farbstoffe der Formel (I) werden nach bekannten Verfahren durch Diazotieren von Aminen der Formel

$$D—NH_2 \quad (VI)$$

und Kuppeln mit Verbindungen der Formel

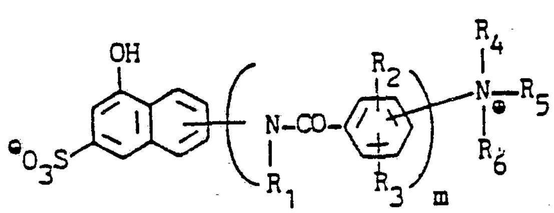

(VII)

hergestellt, worin D, $R_1$-$R_6$ und m die Bedeutung der Formel (I) haben.

Die Kupplung wird vorzugsweise in saurer, neutraler oder schwach alkalischer Lösung durchgeführt ; die Kupplungstemperatur liegt vorzugsweise zwischen 0° und 50 °C.

Die erhaltenen Farbstoffe werden in üblicher Weise isoliert oder das Herstellungsverfahren wird so geleitet, daß sofort eine gebrauchsfertige konzentrierte Farbstofflösung erhalten wird.

Die Farbstoffe werden zum Färben von mit kationischen Farbstoffen färbbaren Materialien verwendet. Genannt seien beispielsweise : Polyacrylnitril, sauer modifizierte Polyester, z. B. Polyglykolterephthalate, wie sie in der belgischen Patentschrift 549 179 oder US-Patentschrift 2 893 816, beschrieben werden, sauer modifizierte Polyamide, tannierte vegitabilische Fasern (Baumwolle), Leder und vorzugsweise Papier. Geeignet sind die Farbstoffe zum Färben von geleimtem sowie ungeleimtem Papier, wobei von gebleichtem oder ungebleichtem Zellstoff ausgegangen werden kann und Laub- oder Nadelholz-Zellstoff wie Birken- und/oder Kiefernsulfit und/oder Sulfat-Zellstoff verwendet werden kann.

Die Farbstoffe werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid, -acetat in Gegenwart von Entstaubungsmitteln eingestellt, oder die Farbstoffe werden direkt als Sprühtrocknungspräparationen in den Handel gebracht. Konzentrierte Farbstofflösungen können wäßriger oder wäßrig/organischer Art sein, wobei übliche, umweltfreundliche und möglichst gut abbaubare Zusätze bevorzugt werden wie organische Säuren, vorzugsweise Essigsäure, Ameisensäure, Milchsäure, Zitronensäure, Methansulfonsäure usw., Amide wie Formamid, Dimethylformamid, Harnstoff, Alkohole wie Glykol, Diglykol, Diglykolether, vorzugsweise Methyl- oder Ethylether usw.

Die Farbstoffe besitzen ein ausgezeichnetes Ziehvermögen und sehr gute Allgemein-Echtheiten. Papierfärbungen zeichnen sich durch sehr gute Naßechtheiten sowie Alaun-, Säure- und Alkali-Echtheit aus. Die Farbstoffe besitzen eine überraschend hohe Lichtechtheit, bei gleichzeitig hoher Klarheit und Farbstärke.

Aus der FR-A-2 423 305 sind Sulfonsäuregruppen und basische und/oder kationische Gruppen enthaltende Farbstoffe bekannt, die zum Färben von Cellulose und Papier geeignet sind. Die nächstliegenden Farbstoffe unterscheiden sich von den neuen Farbstoffen dadurch, daß sie an der Benzoylaminogruppe der Kupplungskomponente keine Ammoniumgruppe tragen.

Bei den in den Beispielen gekennzeichneten Nummern handelt es sich um Farbtonangaben nach « Colour Index Hue Indication Chart ».

## Beispiel 1

8,4 g (0,029 Mol) 4-Amino-4'-trimethylammonium-azobenzolchlorid werden in 200 ml $H_2O$ und 8 ml 28 %iger HCl angeschlämmt und gut verrührt. Man tropft rasch 20,5 ml einer 10 %igen $NaNO_2$-Lösung hinzu und läßt 10 Minuten nachrühren. 12,2 g (0,03 Mol) 7-[(4-Trimethylammoniumbenzoyl)-amino]-4-hydroxy-2-naphthalinsulfonsäure werden in 200 ml $H_2O$ angeschlagen. Nachdem man mit Amidosulfonsäure überschüssiges Nitrit zersetzt hat, wird die Diazotierung zu der Kupplungskomponente gegeben. Mit festem Natriumhydrogencarbonat stellt man pH 6-6,5 ein. Die Kupplung ist nach 2 Stunden beendet. Der ausgefallene Farbstoff wird abgesaugt und im Vakuumschrank bei 50 °C getrocknet. Man erhält einen Farbstoff der Formel

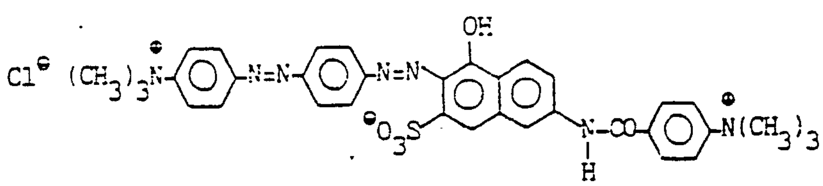

der Papier in blaustichig roten Tönen (Nr. 51) anfärbt.

Das Farbstoffpulver wird in 100 g Milchsäure und 30 ml $H_2O$ bei 60 °C gelöst, abgekühlt, geklärt, und man erhält eine gebrauchsfertige, konzentrierte Farbstofflösung.

Ersetzt man die oben genannte Diazokomponente durch die Kupplungsprodukte von

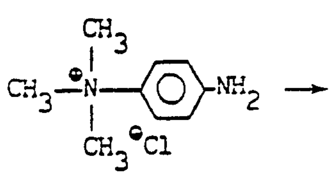

2-Methoxyanilin (Nr. 51) bzw. 2-Methoxyanilinmethansulfonsäure mit anschließender Verseifung
3-Methylanilin (Nr. 10)
2-Methoxy-5-methylanilin (Nr. 11)

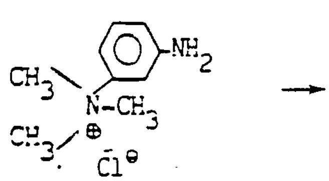

Anilin ; ebenfalls über Methansulfonsäure (Nr. 51)
2-Methoxyanilin (Nr. 51) ; ebenfalls über Methansulfonsäure
3-Methylanilin (Nr. 10)
2-Methoxy-5-methylanilin (Nr. 11)

erhält man blaustichig rote bis violette Farbtöne.

Führt man in den ammoniumgruppentragenden Benzolring noch weitere Substituenten wie z. B. Methoxygruppen ein, erhält man ebenfalls wertvolle Farbstoffe ; beispielsweise ist schon die Kupplung von

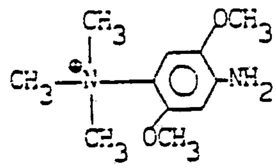

auf die oben genannte Kupplungskomponente als Monoazoverbindung ein brillantes Scharlach (Nr. 49).

Durch Variation in der Kupplungskomponente werden weitere interessante Farbstoffe erhalten.

Beispiel 2

7,8 g (0,029 Mol) der Diazokomponente der Formel

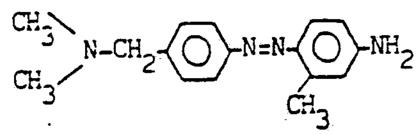

werden in 200 ml $H_2O$ mit 8 ml 28 %iger HCl gelöst und bei 5-10 °C mit 20,5 ml 10 %-iger $NaNO_2$-Lösung diazotiert. Der Nitritüberschuß wird mit Amidosulfonsäure entfernt und die Diazotierung zu 12,2 g (0,03 Mol) 7-[(4-Trimethylammoniumbenzoyl)-amino]-4-hydroxy-2-naphthalinsulfonsäure in 200 ml $H_2O$ gegeben. Die Kupplung wird bei 5-10 °C durchgeführt ; der pH wird mit Natriumhydrogencarbonat auf 5,5-6 gehalten. Nach 4 Stunden wird der ausgefallene Farbstoff isoliert und im Vakuumtrockenschrank bei 50 °C getrocknet.

Man erhält einen Farbstoff der Formel

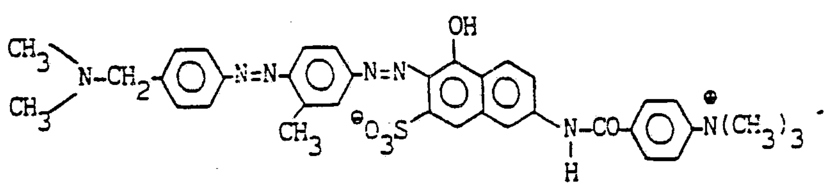

der in Essigsäure löslich ist und der Papier in blaustichig roten Tönen (Nr. 51) anfärbt.

Analog können die folgenden Diazoverbindungen eingesetzt werden, die zu roten bis violetten Farbstoffen führen :

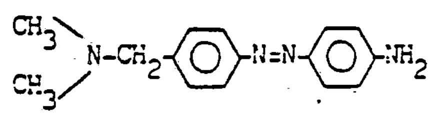

(Nr. 51)

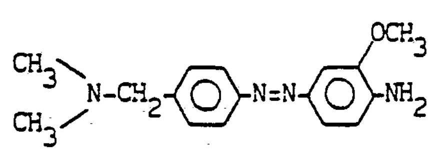

(Nr. 51)

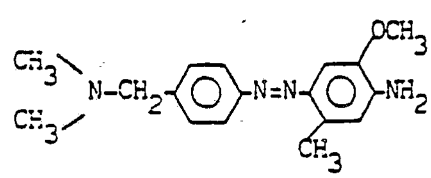

(Nr. 11)

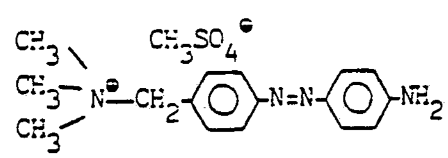

(Nr. 51)

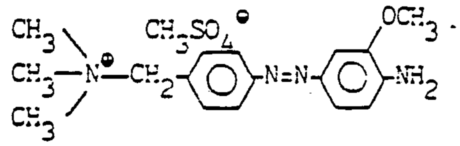

(Nr. 51)

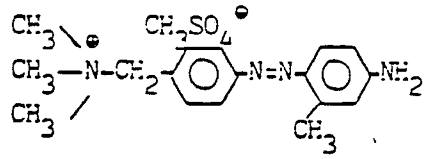

(Nr. 51)

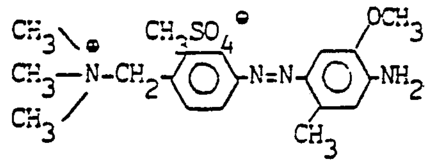

(Nr. 11)

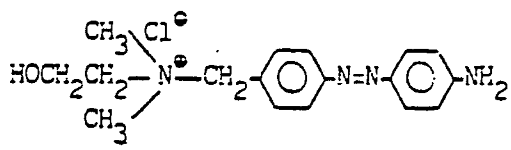

(Nr. 51)

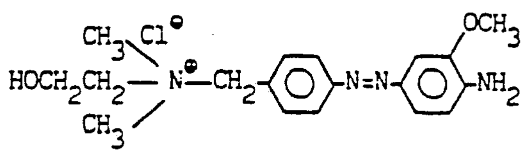

(Nr. 51)

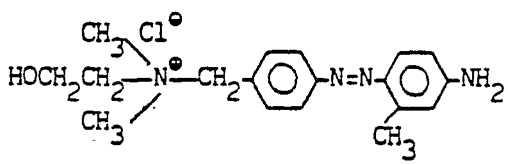

(Nr. 51)

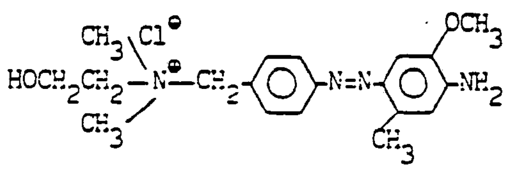

(Nr. 11)

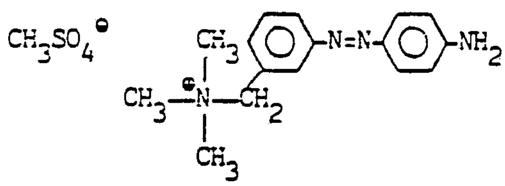

(Nr. 51)

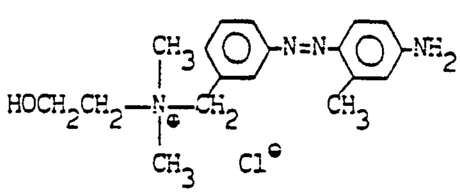

(Nr. 51)

Beispiel 3

7,3 g (0,029 Mol) 2-Aminonaphthalin-5-methylentrimethylammoniumchlorid in 200 ml $H_2O$ werden mit 8 ml 28 %iger HCl versetzt und bei 0 °C mit 20,5 ml 10 %iger $NaNO_2$-Lösung diazotiert. Nach 15 Minuten wird mit Amidosulfonsäure überschüssiges Nitrit entfernt. 12,2 g (0,03 Mol) 7-[(4-Trimethylammoniumbenzoyl)amino]-4-hydroxy-2-naphthalinsulfonsäure werden in 100 ml Wasser angeschlämmt. Man gibt die Diazotierung hinzu und kuppelt bei 0-5 °C und pH 6-6,5. Der pH-Wert wird mit festem $NaHCO_3$ gehalten. Nach 3 Stunden ist die Kupplung beendet. Mit 40 %iger Natrium-hydroxid-Lösung wird auf pH 10 gestellt und der ausgefallene Farbstoff der Formel

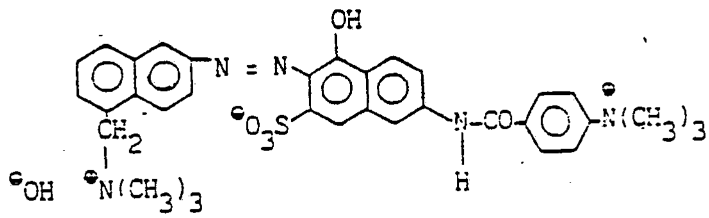

isoliert, der Papier in scharlachroten Tönen (Nr. 7-8) anfärbt. Die feuchte Paste wird in 60 g 85 %iger $H_3PO_4$ und 30 g Wasser bei 40 °C gelöst und anschließend geklärt.

Ersetzt man die Diazokomponente durch die folgenden Aminoverbindungen, erhält man ebenfalls interessante scharlachrote Farbstoffe (alle Nr. 7-8) :

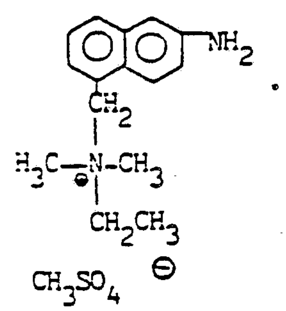

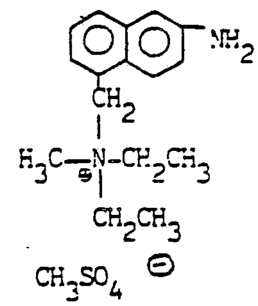

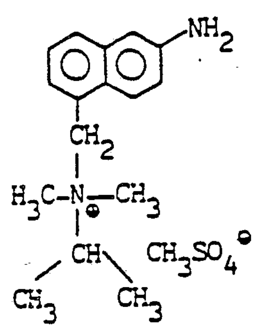

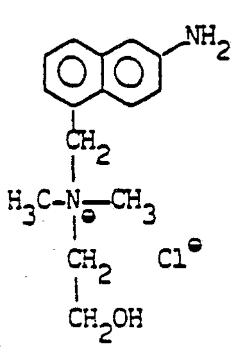

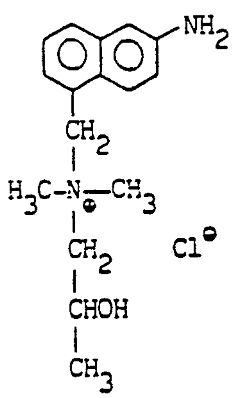

Kuppelt man die oben genannten Aminoverbindungen erst auf Anilin, 2-Methoxyanilin, 3-Methylanilin, 2-Methoxy-5-methylanilin (bzw. auf die entsprechenden Methansulfonsäuren), erhält man wertvolle Aminoazoverbindungen, deren Kupplung auf die Ammoniumbenzoylaminohydroxy-naphthalinsulfonsäuren zu blaustichig roten bis violetten Farbstoffen führt.

Beispiel 4

25 g (0,1 Mol) 2-Aminonaphthalin-5-methylentrimethylammoniumchlorid in 400 ml Wasser werden mit 40 ml 28 %iger HCl versetzt und bei 0 °C mit 34 ml 30 %iger $NaNO_2$-Lösung diazotiert. 31 g (0,11 Mol) 7-Trimethylammonium-4-hydroxy-2-naphthalinsulfonsäure werden in 400 ml $H_2O$ mit 20 %iger Sodalösung gelöst und bei 0 °C mit der Diazotierungslösung versetzt. Der pH wird mit Soda auf 8,5 gehalten. Nach beendeter Kupplung wird der Farbstoff mit 40 %iger Natronlauge bei pH 13 gefällt. Nach 3 Stunden wird der Farbstoff isoliert. Die Paste wird mit 100 g 50 %iger Essigsäure bei 45 °C gelöst und filtriert. Der Farbstoff der Formel

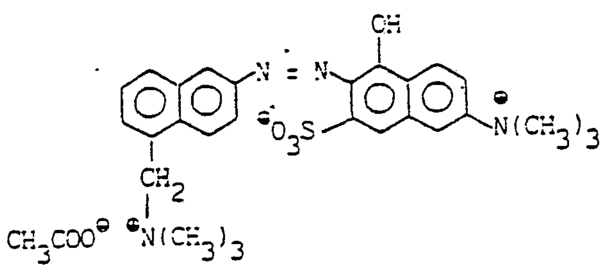

färbt Papier in scharlachroten Tönen (Nr. 7-8).

Beispiel 5

11,2 g (0,029 Mol) der Diazokomponente der Formel

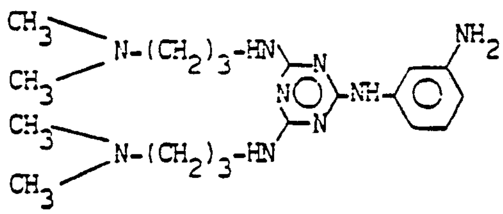

die durch Kondensation von Cyanurchlorid mit 3-Nitroanilin, Eintragen in 3-Dimethylaminopropylamin und anschließende Reduktion hergestellt wurde, werden unter Zugabe von 12 ml 28 %iger HCl in 200 ml $H_2O$ gelöst und mit 20,5 ml 10 %iger $NaNO_2$-Lösung bei 0-5 °C diazotiert. Die Diazotierung wird zu 12,2 g (0,03 Mol) 7-[(4-Trimethylammoniumbenzoyl)-amino]-4-hydroxy-2-naphthalinsulfonsäure in 200 ml Wasser gegeben und bei 5-10 °C und pH 6 mit festem Natriumhydrogencarbonat gekuppelt. Nach 3 Stunden wird mit 40 %iger Natronlauge pH 10 eingestellt und mit 80 g Natriumchlorid ausgesalzen. Der Farbstoff der Formel

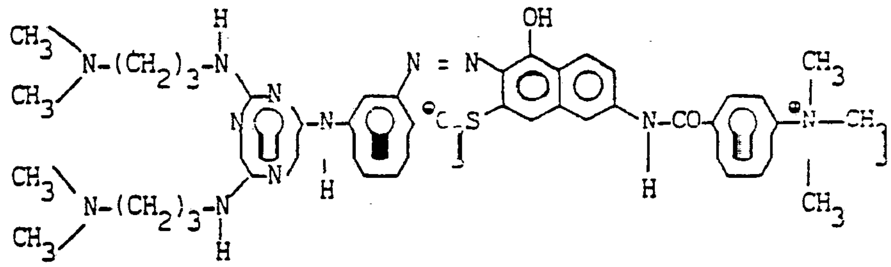

wird abfiltriert und im Vakuumtrockenschrank bei 50 °C getrocknet. Die essigsaure Lösung des Farbstoffs färbt Papier in rotorangen Tönen (Nr. 7). Ersetzt man bei der Herstellung der Diazokomponente das 3-Nitroanilin durch 4-Nitroanilin, 2-Chlor- oder 2-Brom-4-nitroanilin, 2-Methyl-4-nitroanilin, 2-Methoxy-4-nitroanilin, 2-Methyl-3-nitroanilin, 4-Chlor-3-nitroanilin, 4-Methyl-3-nitroanilin, 4-Methoxy-3-nitroanilin, 2-Methyl-5-nitroanilin, 2-Methoxy-5-nitroanilin oder 5-Chlor-2-methoxy-3-nitroanilin und verfährt dann wie oben angegeben, so erhält man Farbstoffe, die Papier in rotorangen bis blaustichig roten Tönen anfärben.

Ersetzt man in diesen Diazoverbindungen wiederum das 3-Dimethylaminopropylamin durch die Amine

$H_2N-(CH_2)_3-N(C_2H_5)_2$
$H_2N-(CH_2)_2-N(CH_3)_2$
$H_2N-(CH_2)_2-N(C_2H_5)_2$

$H_2N-(CH_2)_2-\overset{\oplus}{N}(CH_3)_3Cl^{\ominus}$

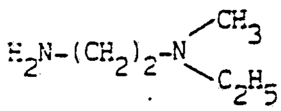

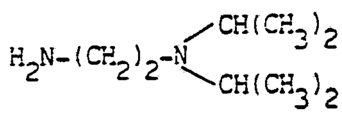

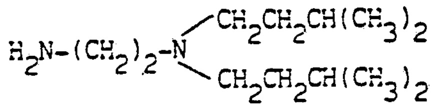

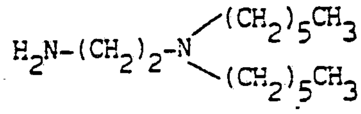

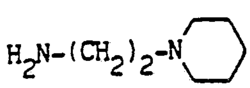

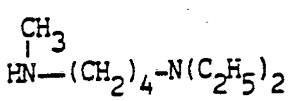
$H_2N-(CH_2)_5-N(C_2H_5)_2$
$H_2N-(CH_2)_6-N(CH_3)_2$
$H_2N-(CH_2)_3-N(CH_2CH_2OH)_2$

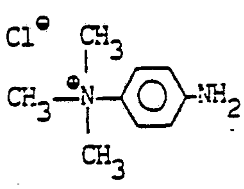

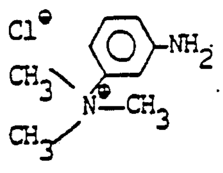

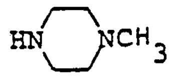

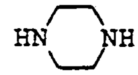

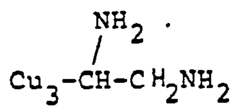

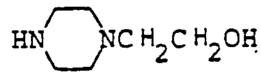

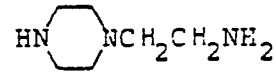

erhält man weitere Diazoverbindungen, die ebenfalls zu wertvollen Farbstoffen führen.

**Patentansprüche**

1. Azofarbstoffe der allgemeinen Formel

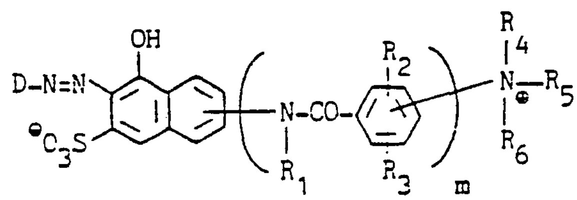

worin
D der Rest einer Diazokomponente,
$R_1$ Wasserstoff oder Alkyl,
$R_2$ und $R_3$ unabhängig voneinander Wasserstoff, Alkyl, Alkoxy, Cyan oder Halogen,
$R_4$, $R_5$ und $R_6$ unabhängig voneinander Alkyl, Alkenyl oder Aralkyl und
m 0 oder 1 bedeuten,
und worin die cyclischen und acyclischen Reste weitere Substituenten tragen können.

2. Azofarbstoffe der Formel des Anspruchs 1, worin
D für eine Diazokomponente der Formel
$D_1-(N=N-D_2)_n-$ steht, worin
$D_1$ einen Rest der Benzol-, Naphthalin- oder heterocyclischen Reihe,
$D_2$ Phenylen oder Naphthylen und
n 0 oder 1 bedeuten,
und worin $D_1$ und/oder $D_2$ durch nichtionogene Reste oder eine Sulfonsäuregruppe substituiert sein können und durch mindestens eine Gruppe der Formel

$$X-W-(CH_2)_n-$$

substituiert sind, worin
X eine Amino- oder Ammoniumgruppe und
W eine direkte Bindung oder ein Brückenglied bedeuten.

3. Azofarbstoffe gemäß Anspruch 2, worin $D_1$ und/oder $D_2$ durch mindestens eine Gruppe der Formel

$$X_1-W_1-(CH_2)_n-$$

substituiert sind, worin $X_1$ eine Gruppe der Formel

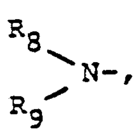 , 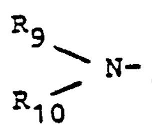 , 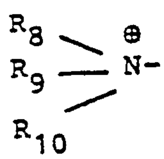 $A^{\ominus}$, 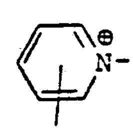 $A^{\ominus}$ oder 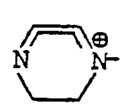 $A^{\ominus}$

$(C_1-C_4-Alkyl)_n$

darstellt, worin
$R_8$, $R_9$, $R_{10}$ Wasserstoff, Alkyl, Alkenyl oder Aralkyl und
$R_8$ außerdem Amino, Alkylamino, Dialkylamino, Aryl oder Cycloalkyl oder

$R_9$ und $R_{10}$ zusammen mit dem an sie gebundenen Stickstoffatom einen 5- oder 6-gliedrigen Ring, n 0 oder 1 und

$A^{\ominus}$ ein Anion bedeuten,

$W_1$ eine Gruppe der Formel

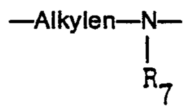

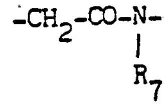

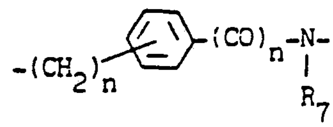

oder

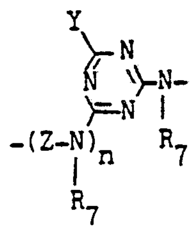

darstellt, worin die freie Valenz von $—NR_7$ an die $—(CH_2)_n$-Gruppe der Formel $X—W—(CH_2)_n—$ gebunden ist, und

$R_7$ Wasserstoff oder Alkyl,

Y Halogen, Hydroxy, Alkyl, Aryl, Alkoxy oder eine Gruppe

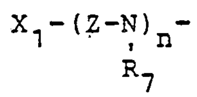

und Z Alkylen, Aralkylen oder Arylen bedeuten.

4. Azofarbstoffe gemäß Anspruch 1 der Formel

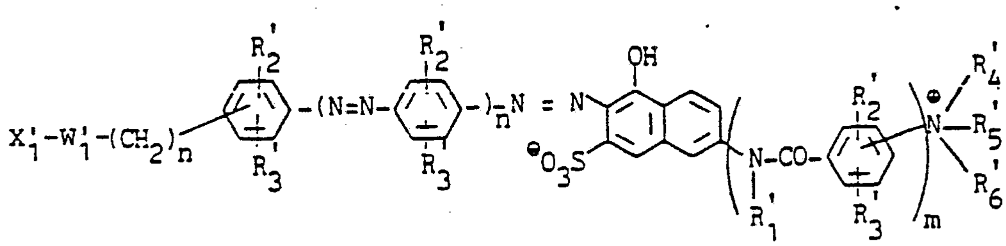

worin

$R_1'$ Wasserstoff oder Methyl,

$R_2'$ und $R_3'$ unabhängig voneinander Wasserstoff, $C_1$-$C_4$-Alkyl, $C_1$-$C_4$-Alkoxy, Cyan oder Halogen,

$R_4'$, $R_5'$ und $R_6'$ unabhängig voneinander gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl oder Phenylethyl,

$X_1'$ eine Gruppe der Formel

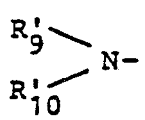 , 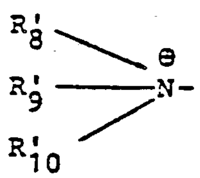 $A^{\ominus}$ , 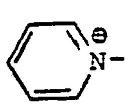 $A^{\ominus}$ oder 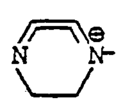 $A^{\ominus}$

$R_8'$, $R_9'$ und $R_{10}'$ unabhängig voneinander Wasserstoff, gegebenenfalls durch Hydroxy, Halogen, Cyan oder $C_1$-$C_4$-Alkoxy substituiertes $C_1$-$C_4$-Alkyl, $C_2$-$C_4$-Alkenyl oder gegebenenfalls durch Halogen, $C_1$-$C_4$-Alkyl, Hydroxy oder $C_1$-$C_4$-Alkoxy substituiertes Benzyl oder Phenylethyl, oder

$R_9'$ und $R_{10}'$ zusammen mit dem an sie gebundenen N-Atom ein gegebenenfalls durch $C_1$-$C_4$-Alkyl substituiertes Pyrrolidin, Piperidin, Morpholin oder Piperazin, dessen externes Stickstoffatom durch gegebenenfalls durch OH oder $NH_2$ substituiertes $C_1$-$C_4$-Alkyl alkyliert oder quaterniert sein kann,

m und n 0 oder 1,

$W_1'$ eine direkte Bindung oder eine Gruppe der Formel

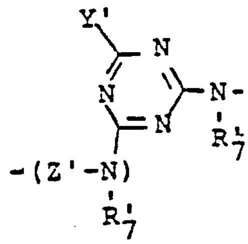

worin

$R_7'$ Wasserstoff oder $C_1$-$C_4$-Alkyl,

Y' Halogen, Hydroxy, $C_1$-$C_4$-Alkyl, Phenyl, $C_1$-$C_4$-Alkoxy oder eine Gruppe der Formel

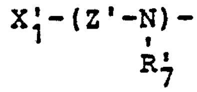

Z' $C_2$-$C_6$-Alkylen oder Phenylen und

$A^{\ominus}$ ein Anion bedeuten.

5. Azofarbstoffe gemäß Anspruch 1 der Formel

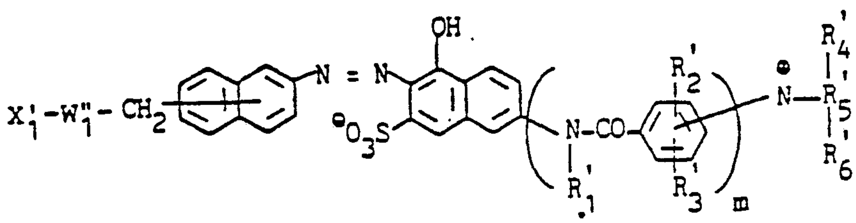

worin $W_1''$ eine direkte Bindung oder eine Gruppe der Formel

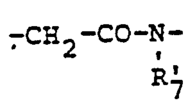

oder

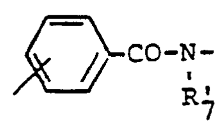

bedeutet, und m, $X_1'$ und $R_1'$-$R_7'$ die in Anspruch 4 angegebene Bedeutung haben.

6. Azofarbstoffe der Formel des Anspruchs 5, in der der Rest

$$X_1'—W_1''—CH_2—$$

in der 5-Stellung des Naphthalinringes steht.

7. Verfahren zur Herstellung von Azofarbstoffen des Anspruchs 1, dadurch gekennzeichnet, daß man Amine der Formel

$$D—NH_2$$

diazotiert und mit Verbindungen der Formel

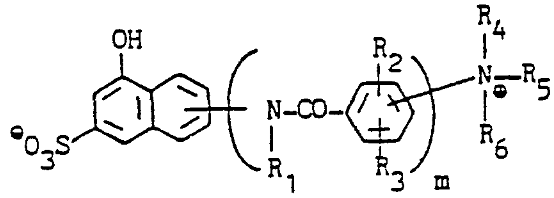

worin die Symbole die in Anspruch 1 angegebene Bedeutung haben, kuppelt.

8. Verfahren zum Färben von natürlichen und synthetischen kationisch anfärbbaren Substraten und Massen, dadurch gekennzeichnet, daß man Farbstoffe des Anspruchs 1 verwendet.

9. Verfahren zum Färben von Papier in der Masse und in der Oberfläche, dadurch gekennzeichnet, daß man Farbstoffe des Anspruchs 1 verwendet.

## Claims

1. Azo dyestuffs of the general formula

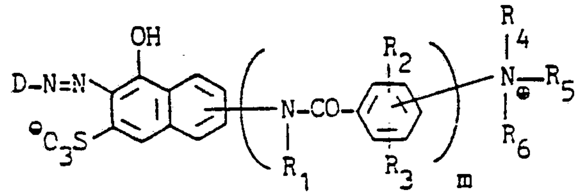

wherein
D denotes the radical of a diazo component,
$R_1$ denotes hydrogen or alkyl,
$R_2$ and $R_3$ independently of one another denote hydrogen, alkyl, alkoxy, cyano or halogen,
$R_4$, $R_5$ and $R_6$ independently of one another denote alkyl, alkenyl or aralkyl and
m denotes 0 or 1,
and wherein the cyclic and acyclic radicals can carry further substituents.

2. Azo dyestuffs of the formula of Claim 1, wherein D represents a diazo component of the formula

$$D_1—(N = N—D_2)_n—$$

wherein
$D_1$ denotes a radical of the benzene, naphthalene or heterocyclic series,
$D_2$ denotes phenylene or naphthylene and
n denotes 0 or 1, and
wherein $D_1$ and/or $D_2$ can be substituted by nonionic radicals or a sulphonic acid group and are substituted by at least one group of the formula

$$X—W—(CH_2)_n—$$

wherein
X denotes an amino or ammonium group and
W denotes a direct bond or a bridge member.

3. Azo dyestuffs according to Claim 2, wherein $D_1$ and/or $D_2$ are substituted by at least one group of the formula

$$X_1—W_1—(CH_2)_n—$$

wherein $X_1$ represents a group of the formula

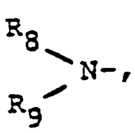 , 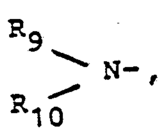 , 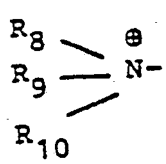 $A^\ominus$, 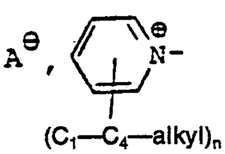 $A^\ominus$ or 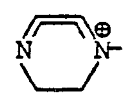 $A^\ominus$

wherein
$R_8$, $R_9$ and $R_{10}$ denote hydrogen, alkyl, alkenyl or aralkyl and
$R_8$ also denotes amino, alkylamino, dialkylamino, aryl or cycloalkyl or
$R_9$ and $R_{10}$ together with the nitrogen atom bonded to them denote a 5-membered or 6-membered ring,
n denotes 0 or 1, and
$A^\ominus$ denotes an anion,
$W_1$ represents a group of the formula

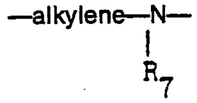 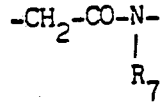 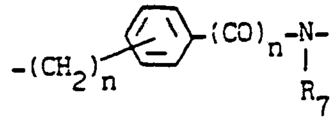

or 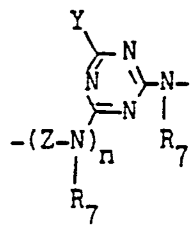

wherein the free valency of $-NR_7$ is bonded to the $-(CH_2)_n$ group of the formula $X-W-(CH_2)_n-$, and

$R_7$ denotes hydrogen or alkyl,

Y denotes halogen, hydroxyl, alkyl, aryl, alkoxy or a group

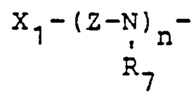

and Z denotes alkylene, aralkylene or arylene.

4. Azo dyestuffs according to Claim 1 of the formula

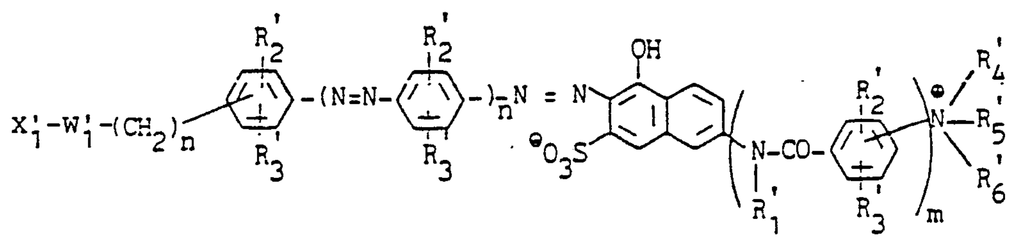

wherein

$R_1'$ denotes hydrogen or methyl,

$R_2'$ and $R_3'$ independently of one another denote hydrogen, $C_1$-$C_4$-alkyl, $C_1$-$C_4$-alkoxy, cyano or halogen,

$R_4'$, $R_5'$ and $R_6'$ independently of one another denote optionally hydroxyl-, halogen-, cyano- or $C_1$-$C_4$-alkoxy-substituted $C_1$-$C_4$-alkyl or $C_2$-$C_4$-alkenyl, or phenylethyl or benzyl which may be substituted by halogen, $C_1$-$C_4$-alkyl, hydroxyl or $C_1$-$C_4$-alkoxy,

$X_1'$ denotes a group of the formula

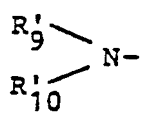 , 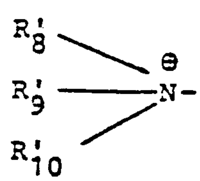 $A^\ominus$ , 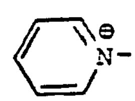 $A^\ominus$ or 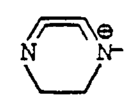 $A^\ominus$

$R_8'$, $R_9'$ and $R_{10}'$ independently of one another denote hydrogen, optionally hydroxyl-, halogen-, cyano- or $C_1$-$C_4$-alkoxy-substituted $C_1$-$C_4$-alkyl or $C_2$-$C_4$-alkenyl, or phenylethyl or benzyl which may be substituted by halogen, $C_1$-$C_4$-alkyl, hydroxyl or $C_1$-$C_4$-alkoxy, or

$R_9'$ and $R_{10}'$ together with the N atom bonded to them denote optionally $C_1$-$C_4$-alkyl-substituted pyrrolidine, piperidine, morpholine or piperazine, the external nitrogen atom of which can be quaternised or alkylated by $C_1$-$C_4$-alkyl which may be substituted by OH or $NH_2$,

m and n denote 0 or 1,

$W_1'$ denotes a direct bond or a group of the formula

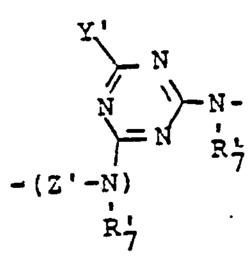

wherein

$R_7'$ denotes hydrogen or $C_1$-$C_4$-alkyl,
Y' denotes halogen, hydroxyl, $C_1$-$C_4$-alkyl, phenyl, $C_1$-$C_4$-alkoxy or a group of the formula

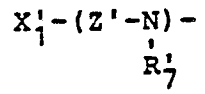

Z' denotes $C_2$-$C_6$-alkylene or phenylene and
$A^{\ominus}$ denotes an anion.

5. Azo dyestuffs according to Claim 1 of the formula

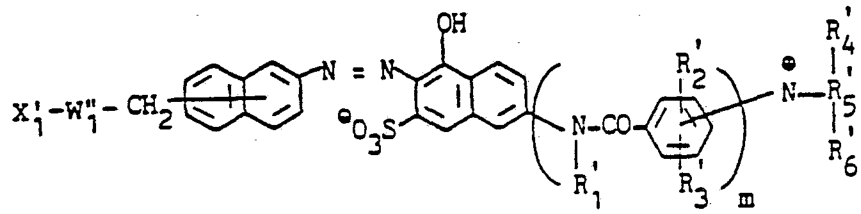

wherein $W_1$" denotes a direct bond or a group of the formula

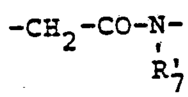 or 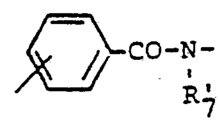

and m, $X_1'$ and $R_1'$-$R_7'$ have the meaning indicated in Claim 4.

6. Azo dyestuffs of the formula of Claim 5, in which the radical

$$X_1'—W_1"—CH_2—$$

is in the 5-position of the naphthalene ring.

7. Process for the preparation of azo dyestuffs of Claim 1, characterised in that amines of the formula

$$D—NH_2$$

are diazotised and the resulting products coupled with compounds of the formula

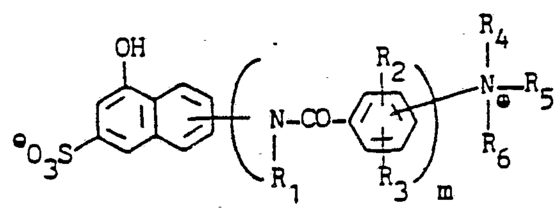

wherein the symbols have the meaning indicated in Claim 1.

8. Process for dyeing/colouring natural and synthetic cationically dyeable/colourable substrates and compositions, characterised in that dyestuffs of Claim 1 are used.

9. Process for pulp-colouring and surface-colouring paper, characterised in that dyestuffs of Claim 1 are used.

## Revendications

1. Colorants azoïques de formule générale :

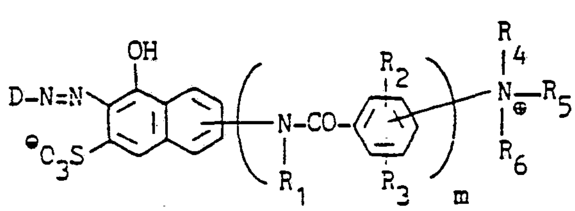 (I)

dans laquelle

D représente le radical d'un composant diazotable,

$R_1$ est un atome d'hydrogène ou un groupe alkyle,

$R_2$ et $R_3$ représentent, indépendamment l'un de l'autre, un atome d'hydrogène ou un groupe alkyle, alcoxy, cyano ou un atome d'halogène,

$R_4$, $R_5$ et $R_6$ représentent, indépendamment l'un de l'autre, un groupe alkyle, alcényle ou aralkyle, et m vaut 0 ou 1,

et les radicaux cycliques et acycliques peuvent porter d'autres substituants.

2. Colorants azoïques répondant à la formule de la revendication 1, dans laquelle D représente un composant diazotable de formule :

$$D_1—(N = N—D_2)_n—$$

dans laquelle

$D_1$ représente un radical de la série benzénique, naphtalénique ou hétérocyclique,

$D_2$ représente un radical phénylène ou naphtylène, et

n vaut 0 ou 1, et

$D_1$ et/ou $D_2$ peuvent être substitués par des radicaux non ionogènes ou par un groupe acide sulfonique, et sont substitués par au moins un groupe de formule

$$X—W—(CH_2)_n—$$

dans laquelle

X représente un groupe amino ou ammonium, et

W représente une liaison directe ou un chaînon de pontage.

3. Colorants azoïques selon la revendication 2, dans lesquels $D_1$ et/ou $D_2$ sont substitués par au moins un groupe de formule :

$$X_1—W_1—(CH_2)_n—$$

dans laquelle $X_1$ représente un groupe de formule

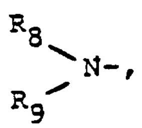 , 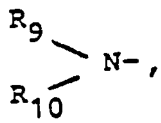 , 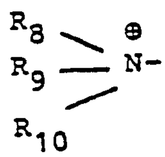 $A^\ominus$ , 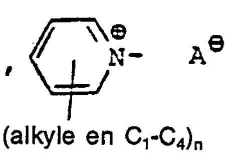 $A^\ominus$ ou 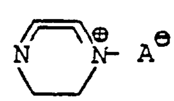

où

$R_8$, $R_9$ et $R_{10}$ représentent un atome d'hydrogène, un groupe alkyle, alcényle ou aralkyle, et

$R_8$ peut représenter en outre un groupe amino, alkylamino, dialkylamino, aryle ou cycloalkyle, ou

$R_9$ et $R_{10}$ pris ensemble avec l'atome d'azote auxquels ils sont reliés, peuvent former un noyau pentagonal ou hexagonal,

n vaut 0 ou 1, et

$A^\ominus$ est un anion,

$W_1$ représente un groupe de formule :

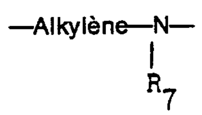 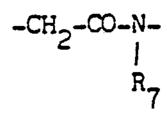 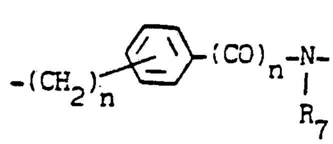

ou 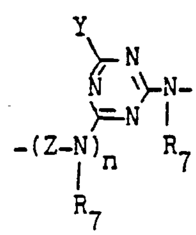

dans lesquelles la valence libre de $—NR_7$ est liée au groupe $—(CH_2)_n—$ de la formule $X—W—(CH_2)_n—$, et

$R_7$ représente un atome d'hydrogène ou un groupe alkyle,

Y représente un atome d'halogène ou un groupe hydroxyle, alkyle, aryle, alcoxy ou un groupe

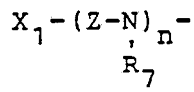

et

Z représente un groupe alkylène, aralkylène ou arylène.

4. Colorants azoïques selon la revendication 1, de formule :

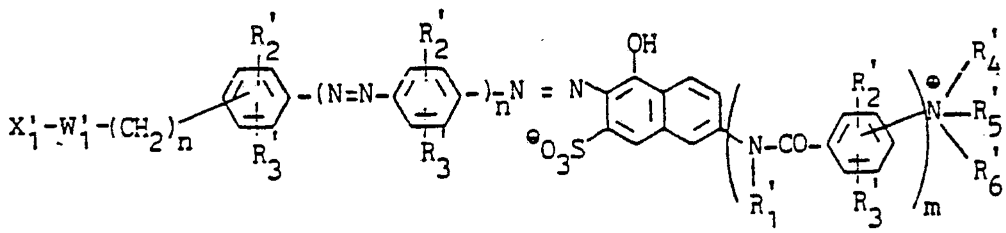

dans laquelle

$R_1'$ représente un atome d'hydrogène ou un groupe méthyle,

$R_2'$ et $R_3'$ représentent, indépendamment l'un de l'autre, un atome d'hydrogène, un groupe alkyle en $C_1$-$C_4$, alcoxy en $C_1$-$C_4$, cyano ou un atome d'halogène,

$R_4'$, $R_5'$ et $R_6'$ représentent, indépendamment l'un de l'autre, un groupe alkyle en $C_1$-$C_4$ ou alcényle en $C_2$-$C_4$ (éventuellement substitué par un groupe hydroxyle, halogéno, cyano ou alcoxy en $C_1$-$C_4$) ou un groupe benzyle ou phényléthyle (éventuellement substitué par de l'halogène ou par un groupe alkyle en $C_1$-$C_4$, hydroxyle ou alcoxy en $C_1$-$C_4$),

$X_1'$ représente un groupe de formule

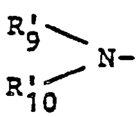 , 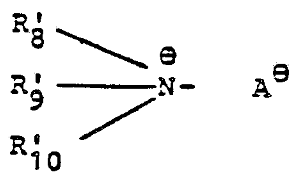 , 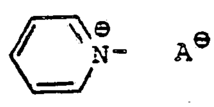 ou 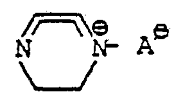

$R_8'$, $R_9'$ et $R_{10}'$ représentent chacun, indépendamment l'un de l'autre, un atome d'hydrogène, un groupe alkyle en $C_1$-$C_4$ ou alcényle en $C_2$-$C_4$ (éventuellement substitué par un groupe hydroxyle, halogéno, cyano ou alcoxy en $C_1$-$C_4$) ou un groupe benzyle ou phényléthyle (éventuellement substitué par de l'halogène, par un groupe alkyle en $C_1$-$C_4$, hydroxyle ou alcoxy en $C_1$-$C_4$), ou

$R_9'$ et $R_{10}'$, pris ensemble avec l'atome de N auquel ils sont liés, peuvent former un noyau pyrrolidine, pipéridine, morpholine ou pipérazine, éventuellement substitué par un groupe alkyle en $C_1$-$C_4$, et dont l'atome d'azote externe peut être alkylé par un groupe alkyle en $C_1$-$C_4$ (substitué éventuellement par OH ou $NH_2$) ou peut être quaternisé,

m et n valent 0 ou 1,

$W_1'$ est une liaison directe ou représente un groupe de formule :

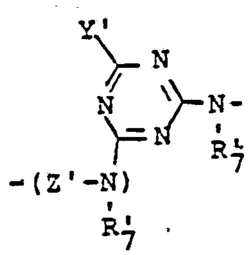

dans laquelle

$R_7'$ est un atome d'hydrogène ou un groupe alkyle en $C_1$-$C_4$,

Y' représente un atome d'halogène, un groupe hydroxyle, alkyle en $C_1$-$C_4$, phényle, alcoxy en $C_1$-$C_4$ ou un groupe de formule

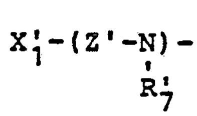

Z' représente un groupe alkylène en $C_2$-$C_6$ ou phénylène, et
$A^{\ominus}$ est un anion.

5. Colorants azoïques selon la revendication 1, de formule

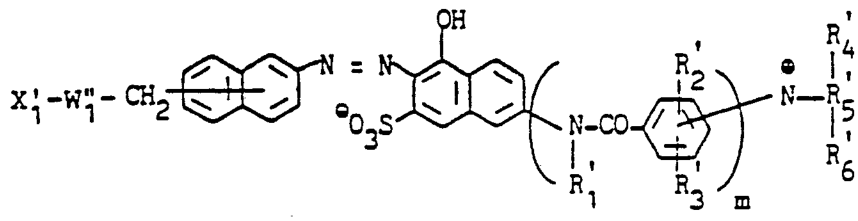

dans laquelle $W_1$" est une liaison directe ou un groupe de formule

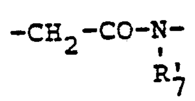

ou

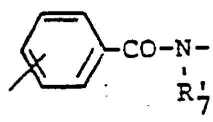

et m, $X_1$' et $R_1$'-$R_7$' ont le sens indiqué à la revendication 4.

6. Colorants azoïques répondant à la formule de la revendication 5, dans laquelle le radical $X_1$'—$W_1$"—$CH_2$— se trouve en position 5 du noyau naphtalénique.

7. Procédé de préparation de colorants azoïques de la revendication 1, caractérisé en ce qu'on diazote des amines de formule :

$$D—NH_2$$

et l'on copule avec des composés de formule :

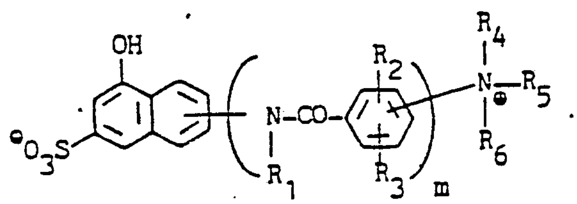

dans laquelle les symboles ont le sens indiqué à la revendication 1.

8. Procédé pour teindre des substrats et masses ou compositions naturels et synthétiques, pouvant être teints par voie cationique, procédé caractérisé en ce que l'on utilise des colorants de la revendication 1.

9. Procédé pour colorer ou teindre du papier dans la masse et en surface, procédé caractérisé en ce qu'on utilise des colorants de la revendication 1.